# EUROPÄISCHE PATENTSCHRIFT

(11) **EP 2 807 964 B1**
(45) Veröffentlichungstag und Bekanntmachung des Hinweises auf die Patenterteilung: **13.05.2015**
(21) Anmeldenummer: 14154184.7
(22) Anmeldetag: 06.02.2014
(51) Int. Cl.: A47J 31/46, A47J 43/12

(54) **Milchaufschäumvorrichtung, Kaffeemaschine, System sowie Reinigungsverfahren**
Milk foaming device, coffee machine, system and cleaning method
Dispositif destiné à émulsionner le lait, machine à café, système et procédé de nettoyage

(30) Priorität: 27.05.2013 DE 102013105402
(43) Veröffentlichungstag der Anmeldung: 03.12.2014
(73) Patentinhaber: Eugster/Frismag AG, 8580 Amriswil (CH)
(72) Erfinder: Riessbeck, Wolfgang, 8597 Landschlacht (CH); Yesil, Saadettin, 78462 Konstanz (DE); Fischer, Daniel, 8590 Romanshorn (CH)
(74) Vertreter: Wagner, Kilian

(56) Entgegenhaltungen:
- EP-A1- 2 353 472
- DE-U1-202008 016 400
- DE-U1-202011 107 306
- DE-U1-202012 009 075

## Beschreibung

Die Erfindung betrifft eine Vorrichtung zum Erzeugen von Milchschaum, gemäß dem Oberbegriff des Anspruchs 1, mit einer Düsenanordnung und einer dieser zugeordneten Unterdruckkammer, die durch Dampfbeaufschlagung der Düsenanordnung aus einer Milchzuleitung Milch ansaugbar ist, an die eine Saugleitung zum Herstellen einer fluidleitenden Verbindung zum Milchreservoir anschließbar ist, wobei stromabwärts der Unterdruckkammer eine Auslassöffnung für Milchschaum vorgesehen ist. Ferner betrifft die Erfindung eine Kaffeemaschine gemäß Anspruch 9 mit einer Milchaufschäumvorrichtung sowie ein System gemäß Anspruch 12 mit einer derartigen Kaffeemaschine, einem Milchreservoir und einer Saugleitung zum Anschließen an die Vorrichtung zum Erzeugen von Milchschaum. Darüber hinaus betrifft die Erfindung ein Verfahren zum Spülen einer Milchzul.eitung zu einer Unterdruckkammer in einer Vorrichtung zum Aufschäumen von Milch gemäß dem Oberbegriff des Anspruchs 14.

Milchaufschäumvorrichtungen sind seit langem bekannt. In der Regel sind diese lösbar an einer Kaffeemaschine anordnenbar, derart, dass die Düsenanordnung fluidleitend mit einer Dampfversorgungsleitung verbunden ist, wobei der durch eine Treibdüse der Düsenanordnung ausströmende Dampf Milch durch eine Milchzuleitung ansaugt, die in der Milchaufschäumvorrichtung aufgeschäumt und durch eine Auslassöffnung einer Kaffeetasse zugeführt wird. In, die Milchzuleitung mündet eine Luftleitung, über die die Milch mit Luft für den Aufschäumvorgang versorgt wird. An die Milchzuleitung ist eine nicht zwingend zur Milchaufschäumvorrichtung gehörende Saugleitung anschließbar, über welche dann die fluidleitende Verbindung zwischen dem Milchrerservoir und der Zuleitung der integralen Milchzufuhrleitung herstellbar ist. Bei der Saugleitung kann es sich im einfachsten Fall um einen Schlauch handeln, der in eine Milchpackung einführbar ist, um aus dieser Milch anzusaugen. Komfortable Systeme umfassen einen zugehörigen Milchbehälter, der an die Milchaufschäumvorrichtung andockbar ist, wobei in diesem Fall die Saugleitung integraler Bestandteil des Milchbehälters ist.

Milchaufschäumvorrichtungen sind beispielsweise in der EP 1 115 317 B1, der DE 20 2008 01640041, der DE 20 2012 005075U1, der EP 2 196 118 B1 sowie der DE 20 2011 107 306 U1 beschrieben.

Bei den bekannten Vorrichtungen zum Erzeugen von Milchsehaum kann die Milchzuleitung dadurch gereinigt werden, dass Heißwasser oder Dampf aus Richtung der in die Milchzuleitung mündende Luftleitung durch die Milchzuleitung, in die im Regelfall eine Luftleitung mündet gefördert wird. Bei bekannten Systemen mit Saugschlauch muss für diesen Spülvorgang sichergestellt werden, dass der Schlauch zuvor an die Tropfschale angedockt wurde, damit das heiße Spülmedium in die Tropfschale geleitet werden kann. Grundsätzlich kann der Spülprozess auch bei nicht in die Tropfschale geführten Saugschlauch durchgeführt werden - in diesem Fall besteht jedoch die Gefahr, dass unkontrolliert Dampf und/oder Heißwasser aus dem Saugschlauch austritt, was schlimmstenfalls zu Verletzungen führen kann. Zudem wird die Handhabung des Saugschlauchs häufig als umständlich bewertet. Eine derartige Vorrichtung ist in der EP 2 353 472 A1 beschrieben.

Bei bekannten Systemen, bei denen ein Milchbehälter an die Milchaufschäumvorrichtung und dort insbesondere an die Milchzuleitung andockbar ist, muss für den Spülvorgang sichergestellt werden, dass der Milchbehälter während des Spülvorgangs weiterhin an der Milchaufschäumvorrichtung angedockt ist, um zu gewährleisten, dass durch die Milchzuleitung strömendes Spülmedium über einen definierten Auslass des Milchbehälters in ein für den Spülprozess bereitzustellendes Gefäß weitergeleitet wird.

Aus der DE 10 2006 023 450 A1 ist eine Milchaufschäumvorrichtung bekannt, die zwischen einer Konfiguration, in der Milch aufschäumbar ist und eine Konfiguration, in der die Vorrichtung reinigbar ist verstellt werden kann. In der Reinigungskonfiguration versperrt dabei ein Riegel eine fluidleitende Verbindung zwischen einer Milchzuleitung, durch die beim Aufschäumen Milch in eine Unterdruckkammer strömen kann und der Unterdruckkammer. Ferner ist in der Reinigungskonfiguration ein in der Milchaufschäumkonfiguration als Schaumauslass dienender Auslass mit einem Einlass der Milchzuleitung über den Milchsaugschlauch verbunden, so dass Spülmedium über die Unterdruckkammer und den Saugschlauch in die Milchzuleitung und über diese in Richtung eines Auffangbehälters strömen kann. Nachteil ist u.a., dass der verschmutzte Saugschlauch an den Milchschaumauslass angeschlossen werden muss und diesen damit kontaminiert. Darüber hinaus wird bei der bekannten Vorrichtung eine in die Milchzuleitung, mündende Luftleitung nicht mit Spülmedium gespült, obwohl die Luftleitung, insbesondere im Verbindungsbereich zur Milchzuleitung durch Milch kontaminiert werden kann. Insgesamt ist die Reinigungsfunktionalität verbesserungsbedürftig.

Ausgehend von dem vorgenannten Stand der Technik liegt der Erfindung die Aufgabe zugrunde eine Milchaufschäumvorrichtung, eine Kaffeemaschine mit einer solchen Milchaufschäumvorrichtung, ein System mit einer derartigen Kaffeemaschine und einem Milchreservoir sowie ein Spülverfahren zum Spülen einer Milchzuleitung einer Milchaufschäumvorrichtung anzugeben, mit denen Fehlbedienungen zum Spülen der Milchzuleitung verhindert und gleichzeitig die Verletzungsgefahr minimiert wird. Darüber hinaus soll die Handhabung bevorzugt gegenüber bekannten System komfortabler gestaltet sein.

Diese Aufgabe wird hinsichtlich der Milchaufschäumvorrichtung mit den Merkmalen des Anspruchs 1, hinsichtlich der Kaffeemaschine mit den Merkmalen des Anspruchs 11, hinsichtlich des Systems mit den Merkmalen des Anspruchs 12 und hinsichtlich des Verfahrens mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Zur Lösung vorstehender Aufgabe schlägt die Erfindung ein ganzes Maßnahmenpaket vor. Zunächst ist es wesentlich, dass die Milchaufschäumvorrichtung zusätzlich zu der Milchzuleitung eine (integrale, d.h. bevorzugt dauerhaft an der Milchaufschäumvorrichtung angeordnete bzw. nicht ohne Werkzeug abnehmbare) Spülleitung erhält bzw. aufweist, die für den Spülvorgang mit der Milchzuleitung fluidleitend verbindbar ist. Durch die Spülleitung kann der Milchzuleitung Spülmedium, insbesondere erhitztes Wasser und/oder Dampf zugeführt werden oder alternativ, was bevorzugt ist, kann über die Milchzuleitung aus Richtung der Unterdruckkammer oder einer bevorzugt in die Milchzuleitung mündenden Luftleitung zuströmendes Spülmedium durch die Spülleitung abgeleitet werden, insbesondere in Richtung eines externen Gefäßes oder zu einer Tropfschale oder einem sonstigen Behältnis der Kaffeemaschine, Zum Herstellen einer derartigen fluidleitenden Verbindung zwischen der Milchzuleitung und der Spülleitung sind Verbindungsmittel vorgesehen, die zumindest in der Verbindungsposition, in der sie die Spülleitung (Spülkanal) fluidleitend mit der Milchzuleitung verbinden, Bestandteil der Milchaufschäumvorrichtung sind. Um nun eine Fehlbedienung einer derartigen Milchaufschäumvorrichtung zu vermeiden sind den Verbindungsmitteln erfindungsgemäß Sensormittel zugeordnet, mit denen detektierbar ist, ob sich die Verbindungsmittel in der Verbindungsposition befinden und vorzugsweise folglich eine fluidleitende Verbindung zwischen der Milchzuleitung und der Spülleitung hergestellt ist.

Bei Systemen mit Saugschlauch wird durch die Erfindung dessen Einsatznotwendigkeit zum Abführen des Spülmediums (Spülfluids) in die Tropfschale vermieden. Bei Systemen mit andockbarem Milchbehälter kann der Spülprozess ohne angedockten Milchbehälter durchgeführt werden. In beiden Fällen besteht keine Verbrühungsgefahr für den Konsumenten.

Dies liegt insbesondere daran, dass durch das Vorsehen der integralen (zusätzlichen) Spülleitung ein definiertes Spülmedium, insbesondere Abfluss, in Richtung eines integralen oder separaten Auffangbehältnisses der Kaffeemaschine sichergestellt wird, wobei als zusätzliche Sicherheit gegen Fehlbedienungen Sensormittel vorgesehen sind, mit denen detektierbar ist, ob sich Verbindungsmittel in einer Verbindungsposition befinden, in der eine fluidleitende Verbindung zwischen Spülleitung und Milchzuleitung gegeben ist.

Erfindungsgemäß sind ein von der Unterdruckkammer abgewandtes Ende, insbesondere ein Milchzulaufende, der Milchzuleitung und ein Ende, insbesondere ein Spülmediumeinlaufende, der Spülleitung so relativ zueinander angeordnet (bevorzugt weniger als 5 cm, noch weiter bevorzugt weniger als 3 cm beabstandet), dass diese über die Verbindungsmittel miteinander verbunden werden können bzw. in der Verbindungsposition der Verbindungsmittel über diese mitenander verbunden sind. Bevorzugt zeigen hierzu die Enden in die gleiche, insbesondere eine seitliche Richtung. Bevorzugt handelt es sich bei dem von der Unterdruckkammer abgewandten Ende der Milchzuleitung um ein als Anschlussende ausgebildetes Ende, an welches die Saugleitung anschließbar ist, also entweder ein Saugschlauch ein- oder aufsteckbar ist und/oder eine Saugleitung eines Milchbehälters andockbar ist. Alternativ handelt es sich bei dem Ende um ein Ende, welches über einen Milchdurchleitungskanal entsprechend ausgebildeter Verbindungsmittel mit. Milch versorgbar ist. Dadurch, dass die Verbindungsmittel in der Verbindungsposition das von der Unterdruckkammer abgewandte Ende der Milchzuleitung mit dem als Einlassende ausgebildeten Ende der Spülleitung fluidleitend verbinden kann die Milchzuleitung entgegen der Strömungsrichtung der Milch während der Milchschaumzubereitung mit Spülmedium durchströmt werden.

Die erfindungsgemäße Ausgestaltung der Milcherzeugungsvorrichtung und/oder einer damit ausgestatteten Kaffeemaschine bietet auch die Möglichkeit für eine vorteilhafte Weiterbildung der Erfindung, wonach die Milchzuleitung bei in der Verbindungsposition angeordneten Verbindungsmitteln fluidleitend mit der Unterdruckkammer verbunden ist, dass also entgegen der Lehre der DE 10 2006 023 450 A1 eine fluidleitende Verbindung nicht durch einen Riegel oder dergleichen Verschlussmittel verschlossen ist, so dass bei bevorzugter entsprechender Ausbildung der Kaffeemaschine Spülmedium, insbesondere Spüldampf und/oder Spülheißwasser, welches durch eine Dampf- und/oder Heißwasserleitung, bevorzugt durch eine Treibdüse hindurch, in die Düsenkammer strömt aus dieser unmittelbar entgegen der Strömungsrichtung der Milch während der Milchschaumherstellung in die Milchzuleitung strömen kann und weiter durch diese über die Verbindungsmittel in die Spülleitung, wobei die Spülleitung dann bevorzugt in ein Auffangbehältnis einer entsprechend ausgestalteten Kaffeemaschine ausmündet. Bevorzugt strömt gleichzeitig ein Teil des Spülmediums aus der Unterdruckkammer über einen Milchschaumauslass in ein Auffangbehältnis. Zusätzlich oder alternativ ist es durch die erfindungsgemäße Ausgestaltung der Milchschaumerzeugungsvorrichtung in Weiterbildung der Erfindung möglich und bevorzugt, dass über eine in die Milchzuleitung mündende Luftleitung, über die der Milch während der Milchaufschäumung Luft zugeleitet wird, Spülmedium in die Milchzuleitung gefördert wird und in der Milchzuleitung in Richtung Unterdruckkammer und weiter unmittelbar in diese hineinströmen kann. Bevorzugt gleichzeitig kann das Spülmedium auch in die entgegengesetzte Richtung innerhalb der Milchzuleitung, in Richtung Verbindungsmittel strömen und über diese in die Spülleitung.

Hinsichtlich der Ausbildung und Anordnung der Verbindungsmittel gibt es unterschiedliche Möglichkeiten. Im einfachsten Fall handelt es sich um ein abnehmbares Teil, welches einen Verbindungskanal begrenzt, über den im an der Milchaufschäumvorrichtung in der Verbindungsposition festgelegten, insbesondere aufgesteckten Zustand Spülmedium, insbesondere Dampf oder Wasser strömen kann, wobei die Verbindungsmittel in dem aus der Verbindungsposition abgenommenen Zustand separat von der Vorrichtung oder der Kaffeemaschine aufbewahrt werden können oder bevorzugt an einer anderen, definierten Position der Vorrichtung oder der Kaffeemaschine gehalten werden können. Bevorzugt ist jedoch eine Ausführungsform, bei welcher die Verbindungsmittel zwischen der Verbindungsposition und einer weiteren Position im an der Vorrichtung und/oder der Kaffeemaschine festgelegten (unverlierbar gesicherten) Zustand verstellt werden können, d.h. unverlierbar gehalten sind. Dabei sind die unterschiedlichsten Verstellbewegungen realisierbar. So ist eine verdrehbare und/oder verschiebbare und/oder verschwenkbare Anordnung der Verbindungsmittel zwischen der Verbindungsposition und einer, weiteren Position, insbesondere einer Parkposition und/oder Milchdurchlaufposition umsetzbar.

Im Hinblick auf die Ausgestaltung und Anordnung der integralen Spülleitung gibt es unterschiedliche Möglichkeiten. Bevorzugt handelt es sich nicht um eine schlauchartige Leitung sondern um eine starre Leitung, die noch weiter bevorzugt in einem Kunststoffspritzgussteil ausgebildet ist. Ganz besonders bevorzugt handelt es sich bei dem Bauteil, in dem die Spülleitung ausgebildet ist, um dasjenige Bauteil, in welchem auch die Milchzuleitung ausgebildet ist. Alternativ handelt es sich bevorzugt um ein Bauteil, welches, beispielsweise durch Verschrauben, Verrasten, Verkleben oder Vernieten an dem die Milchzuleitung aufweisenden Bauteil dauerhaft festgelegt ist. Um eine besonders einfache Handhabung zu gewährleisten ist es bevorzugt, wenn die Spülleitung und die Milchzuleitung, zumindest abschnittsweise parallel verlaufen, wobei es besonders bevorzugt ist, wenn ein Ende der Milchzuleitung und ein Ende der Spülleitung benachbart zueinander angeordnet sind, insbesondere über- oder nebeneinander, um somit auf einfache Weise eine fluidleitende Verbindung mittels der Verbindungsmittel herstellen zu können.

Die Düsenanordnung der Milchaufschäumvorrichtung umfasst bevorzugt eine Treibdüse, durch die bevorzugt der Unterdruckkammer Dampf zugeführt wird. Weiter bevorzugt umfasst die Düsenanordnung eine Verengungsstelle (Düse) im Bereich eines Unterdruckkammerausgangs. Bevorzugt kann der über die Treibdüse in die Unterdruckkammer zugeführte Dampf und/oder über die Treibdüse zugeführtes Heißwasser jeweils als Spülmedium während der Reinigung unmittelbar aus der Unterdruckkammer in die Milchzuleitung und durch diese hindurch zu den Verbindungsmitteln und über diese in die Spülleitung strömen.

Ganz besonders bevorzugt ist es, wenn die Verbindungsmittel in der Verbindungsposition unmittelbar das von der Unterdruckkammer abgewandte Ende der Milchzuleitung, welches bevorzugt als Anschlussende zum Anschließen eines Saugschlauchs ausgebildet ist, kontaktieren und gleichzeitig einen unmittelbaren Kontakt haben zu dem benachbarten Einlassende der Spülleitung.

Grundsätzlich ist es, wie erwähnt ausreichend, wenn die Verbindungsmittel einen Verbindungskanal begrenzen, mit dem die Milchzuleitung und die Spülleitung fluidleitend miteinander verbindbar sind. Insbesondere für den Fall, dass die Verbindungsmittel unverlierbar an der Vorrichtung angeordnet sind, kann es von Vorteil sein, wenn zusätzlich zu diesem Verbindungskanal von den Verbindungsmitteln ein Milchdurchleitungskanal begrenzt wird, durch welchen Milch von einer Saugleitung zu der Milchzuleitung durchleitbar ist, wenn keine fluidleitende Verbindung zwischen der Milchzuleitung und dem Spülkanal besteht. In diesem Fall wird (was alternativ möglich ist) die Saugleitung nicht unmittelbar an die Milchzuleitung angeschlossen, sondern an die Verbindungsmittel, durch die hindurch die Milch dann in die Milchzuleitung geleitet werden kann. Eine derartige Ausführungsform ist insbesondere dann interessant, wenn sich die Verbindungsmittel um eine Drehachse verdrehen lassen, und zwar zwischen der Verbindungsposition und mindestens einer weiteren Position, in der der Verbindungskanal keine fluidleitende Verbindung zwischen der Milchzuleitung und dem Spülkanal herstellt sondern der Durchleitungskanal zu der Milchzuleitung.

Auch im Hinblick auf die Anordnung eines, insbesondere von einem Einlassende der Milchzuleitung abgewandten, Auslassendes der Spülleitung gibt es unterschiedliche Möglichkeiten. Gemäß einer ersten Alternative ist das Auslassendetluidisch getrennt von einem Milchschaumkanal, d.h. das Auslassende befindet sich benachbart zu einer Auslassöffnung für Milchschaum, so dass durch das Auslassende der Spülleitung Spülmedium austreten kann, ohne dass dieses durch die Auslassöffnung für Milchschaum strömen muss. Besonders bevorzugt ist es dabei, wenn sowohl die Auslassöffnung für Milchschaum als auch das Auslassende der Spülleitung nach unten weisen. Gemäß einer zweiten Alternative ist es möglich, dass das Auslassende der Spülleitung so angeordnet ist, dass das durch dieses austretende Spülmedium danach noch die Auslassöffnung für Milchschaum passieren muss. Hierzu mündet das Auslassende der Spülleitung bevorzugt stromaufwärts der Auslassöffnung aus, insbesondere in einen Verbindungskanal zwischen der Unterdruckkammer und der Auslassöffnung, oder direkt in die Unterdruckkammer.

Wie eingangs bereits erwähnt ist es besonders vorteilhaft, wenn in die Milchzuleitung eine Luftleitung mündet, durch die bei einem Milchaufschäumprozess Luft der Milch zuführbar ist, wobei es besonders bevorzugt ist, wenn die Luft ansaugbar ist. Bevorzugt wird während des Spülvorgangs der Mifchzuleitung über diese Luftleitung Spülmedium zugeleitet.

Die Erfindung führt auch auf eine Kaffeemaschine mit einer wie zuvor beschrieben ausgebildeten Milchaufschäumvorrichtung. Die Vorrichtung kann dauerhaft integraler Bestandteil der Kaffeemaschine oder lösbar an der Kaffeemaschine festgelegt sein, beispielsweise durch Verrasten oder einfach nur durch Klemmen, insbesondere eines die Milchzuleitung, die Spülleitung, die Unterdruckkammer und die Treibdüse beinhaltenden Bauteils. Für den Fall, dass die Vorrichtung von der Kaffeemaschine lösbar ist, muss diese nicht vollständig von dieser ablösbar sein - so ist es bevorzugt, wenn der den Verbindungsmitteln zugeordnete Sensor und/oder die Verbindungsmittel an dem verbleibenden Rest der Kaffeemaschine, insbesondere im Bereich, vorzugsweise an dem Gehäuse der Kaffeemaschine angeordnet sind.

Bei den Sensormitteln kann es sich beispielsweise um einen Druckschaltersensor oder eine Lichtschranke handeln. Auch ist es denkbar, dass die Verbindungsmittel in der Verbindungsposition einen Stromkreis öffnen oder schließen und hierdurch die Detektion der Positionierung erfolgt. Weitere alternative Ausführungen sind denkbar.

Im Hinblick auf die Ausbildung der Kaffeemaschine gibt es unterschiedliche Möglichkeiten. So kann diese beispielsweise als Kaffeevollautomat ausgebildet sein, umfassend eine Brühkammer, in der zuvor innerhalb der Maschine gemahlenes Kaffeemehl zu Kaffee ausgelaugt wird. Alternativ ist es möglich, dass es sich um eine Pad- oder Kapselmaschine handelt, in welcher das Kaffeemehl nicht gemahlen sondern in einem Behältnis, beispielsweise Pad oder Kapsel zugeführt wird.

Besonders bevorzugt ist es, wenn die Sensormittel signalleitend mit einer Steuereinheit verbunden sind, mit welcher automatisch oder auf entsprechende Eingabe eines Benutzers ein Spülvorgang auslösbar bzw. ansteuerbar ist, wobei die Steuereinheit derart ausgebildet ist, dass sie, insbesondere trotz des automatischen Befehls oder eines Benutzerbefehls den Spülvorgang nur unter der Bedingung startet, dass die Sensormittel die Verbindungsmittel in der Verbindungsposition detektieren. Mit anderen Worten wird der Spülvorgang erst dann freigegeben, wenn eine fluidleitende Verbindung zwischen Milchzuleitung und Spülleitung besteht. Bei dem Spülvorgang wird die Milchzuleitung mit Spülmedium gespült, welches bevorzugt durch eine in die Milchzuleitung mündende Luftleitung und/oder aus Richtung der Unterdruckkammer zugeführt wird. Denkbar ist auch die Spülung aus Richtung der Spülleitung.

Besonders bevorzugt ist es, wenn ein Auslassende der Spülleitung so angeordnet ist, dass das hieraus ausmündende Spülmedium (Spülfluid) in dasselbe, insbesondere kaffeemaschinenintegrale Gefäß, beispielsweise eine Tropfschale und/oder ein Restwasserbehälter einmünden kann, wie ein aus der Milchschaumauslassöffnung strömendes Fluid. Ganz besonders bevorzugt ist das Auslassende der Spülleitung so angeordnet, dass das Spülmedium zum Ausströmen die Milchschaumauslassöffnung passieren muss.

Die Erfindung führt auch auf ein System, umfassend eine nach dem Konzept der Erfindung ausgebildete Kaffeemaschine sowie ein Milchreservoir und eine Saugleitung.

Im einfachsten Fall handelt es sich bei dem Milchreservoir um eine Kaufpackung für Milch und bei der Saugleitung um einen Saugschlauch, insbesondere aus Silikon. Alternativ ist es denkbar, dass es sich bei dem Milchreservoir um einen speziellen Kaffeebehälter handelt, dessen integrale Saugleitung an die Milchzuleitung der Milchaufschäumvorrichtung andockbar ist.

Im Hinblick auf Anschlussmöglichkeiten der Saugleitung an die Milchaufschäumvorrichtung gibt es unterschiedliche Möglichkeiten. So ist es denkbar, dass die Saugleitung unmittelbar an ein dann als Einlassende ausgebildetes Ende der Milchzuleitung anschließbar ist, oder alternativ an einen entsprechenden (fakultativen) Anschluss der Verbindungsmittel.

Die Erfindung führt auch auf ein Verfahren zum Spülen einer Milchzuleitung zum Zuführen von Milch zu einer Unterdruckkammer in einer Milchaufschäumvorrichtung, wobei Spülmedium, insbesondere Dampf oder bevorzugt erhitztes Wasser erst dann durch die Milchzuleitung gefördert wird, nachdem die Milchzuleitung, insbesondere manuell oder alternativ automatisch, insbesondere motorisch fluidleitend mit einer Spülleitung verbunden wird, durch die bevorzugt das Spülmedium nach Passieren der Milchzuleitung strömt und über diese, insbesondere in ein Gefäß der Kaffeemaschine abgeführt wird. Zudem wird detektiert, ob eine fluidleitende Verbindung zwischen der Milchzuleitung und der Spülleitung besteht, insbesondere indem überprüft wird, ob entsprechende Verbindungsmittel entsprechend in einer Verbindungsposition positioniert sind. Bevorzugt erfolgt die Spülung der Milchzuleitung erst nach erfolgreicher Detektion.

Besonders bevorzugt ist es, wenn in Weiterbildung des Verfahrens die Steuereinheit Spülmediumversorgungsmittel (bevorzugt eine Pumpe und Erhitzungsmittel zum Herstellen von Heißwasser und/oder Erzeugen von Dampf) sowie Ventilmittel so ansteuert, dass während des Spülvorganges Spülmedium über eine vorerwähnte Treibdüse in die Unterdruckkammer strömt und aus dieser unmittelbar in die Milchzuleitung und/oder dass das Spülmedium, insbesondere in einem separaten Reinigungsschritt, durch eine in die Milchzuleitung mündende Luftleitung strömt und aus dieser in der Milchzuleitung bevorzugt in zwei einander entgegengesetzte Richtungen, zum einen durch die Milchzuleitung unmittelbar in die Unterdruckkammer und zum anderen durch die Milchzuleitung über die Verbindungsmittel in den Spülkanal.

Besonders bevorzugt ist es, wenn vor der Überführung der Verbindungsmittel, vorzugsweise aus einer Parkposition, in die Verbindungsposition ein an dem von der Unterdruckkammer abgewandten Ende der Milchzuleitung (bevorzugt Anschlussende) fixierter Saugschlauch abgelöst wird und die Verbindungsmittel dieses Ende der Milchzuleitung in der Verbindungsposition unmittelbar kontaktieren.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Milchaufschäumvorrichtung mit daran angedocktem Milchbehälter,
- Fig. 2:: die Milchaufschäumvorrichtung gemäß Fig. 1 mit Verbindungsmitteln sowie Sensormitteln, wobei die Verbindungsmittel in der gezeigten Verbindungsposition eine fluidleitende Verbindung zwischen einer Milchzuleitung und einer Spülleitung der Milchaufschäumvorrichtung herstellen,
- Fig. 3:: ein alternatives Ausführungsbeispiel einer Milchaufschäumvorrichtung, bei welcher die Verbindungsmittel im Gegensatz zu Fig. 2 nicht als ablösbarer Stopfen sondern als verschwenkbare Anordnung als dauerhafter Bestandteil der Milchaufschäumvorrichtung ausgebildet sind,
- Fig. 4:: ein weiteres alternatives Ausführungsbeispiel einer Milchaufschäumvorrichtung, bei dem die Verbindungsmittel von einem abnehmbaren Schlauchstück gebildet sind,
- Fig. 5a:: ein weiteres alternatives Ausführungsbeispiel einer Milchaufschäumvorrichtung mit verdrehbar angeordneten Verbindungsmitteln,
- Fig. 5b:: eine um 90° im Vergleich zu Fig. 5a gedrehte Ansicht der Verbindungsmittel,
- Fig. 6:: eine Aufschäumvorrichtung, bei der ein Auslassende des Spülkanals neben einer Auslassöffnung für Milchschaum ausmündet,
- Fig. 7:: ein alternatives Ausführungsbeispiel einer Milchaufschäumvorrichtung, bei welcher der Spülkanal in einen Kanal für Milchschaum ausmündet,
- Fig. 8:: ein weiteres alternatives Ausführungsbeispiel einer Milchaufschäumvorrichtung, bei der der Spülkanal in eine Unterdruckkammer der Milchaufschäumvorrichtung ausmündet,
- Fig. 9 bis Fig. 12:: alternative Spülvorgänge zur Reinigung der Milchaufschäumvorrichtung.

In den Figuren sind gleiche Elemente und Elemente mit der gleichen Funktion mit den gleichen Bezugszeichen gekennzeichnet.

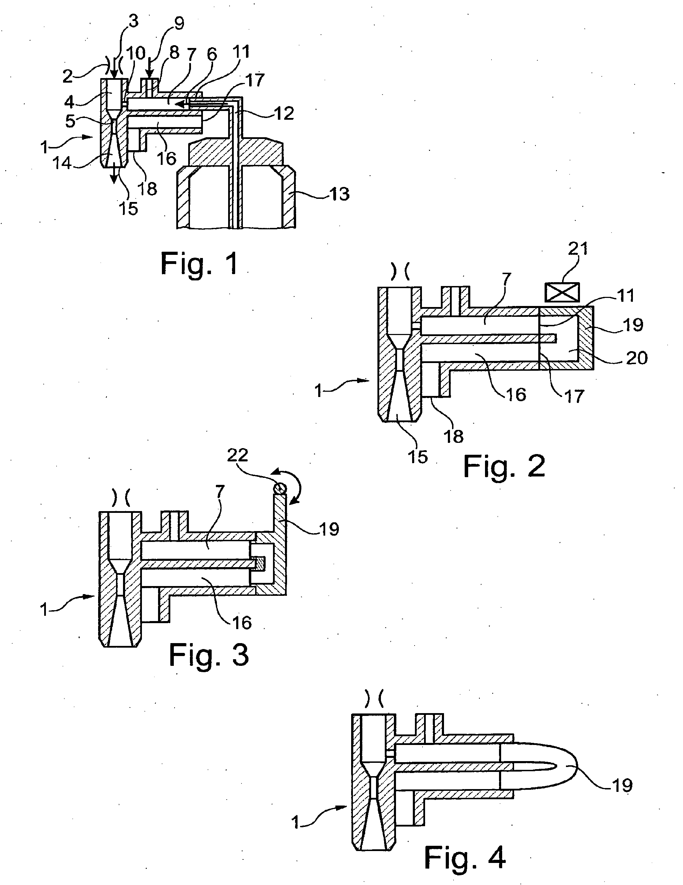

In Fig. 1 ist in der linken Zeichnungshälfte eine Vorrichtung zum Erzeugen von Milchschaum 1 (Milchaufschäumvorrichtung) gezeigt, wie diese fest (dauerhaft) an einer Kaffeemaschine angeordnet sein kann, oder zumindest teilweise oder vollständig von der Kaffeemaschine abnehmbar angeordnet sein kann.

Die Vorrichtung 1 umfasst eine nur schematisch dargestellte Treibdüse 2, durch welche Wasserdampf 3 in eine Unterdruckkammer 4 strömen kann. Die Unterdruckkammer 4 weist einen verjüngten Auslass 5 auf. Durch das Durchströmen der Unterdruckkammer 4 mittels des durch die Treibdüse 2 beschleunigten Wasserdampfes 3 entsteht ein Unterdruck, aufgrund dessen Milch 6 über eine Milchzuleitung 7, die starr ausgebildet und fester Bestandteil der Vorrichtung 1, ist angesaugt wird. In die Milchzuleitung 7 mündet eine Luftleitung 8, über welche Luft 9 dem Milchstrom zugeführt und in der Unterdruckkammer 4 mit der Milch 6 zu Milchschaum verwirbelt wird.

Die Milchzuleitung 7 mündet mittels eines verjüngten Drosselendes 10 in die Unterdruckkammer 4. An dem von der Unterdruckkammer 4 abgewandten Ende 11 ist eine nicht zur Vorrichtung 1 gehörende Saugleitung 12 angeschlossen, die in dem gezeigten Ausführungsbeispiel Bestandteil eines als Milchbehälter ausgebildeten Milchreservoirs 13 ist, wobei alternativ ein Saugschlauch vorgesehen sein kann, der beispielsweise in eine Milchverpackung (Milchreservoir) ragt.

Kurz gesagt wird also zum Aufschäumen von Milch, diese über die Milchzuleitung 7 aus dem Milchreservoir 13 über die Saugleitung 12 angesaugt. Gleichzeitig wird über die Luftleitung 8 Luft zugeführt, insbesondere angesaugt und das Luft-Milchgemisch wird durch den Unterdruck in der Unterdruckkammer 4, verursacht durch das Durchströmen mit Heißdampf 3 angesaugt und dort aufgeschäumt, wobei das Wasserdampf-Milch-Luftgemisch die Unterdruckkammer 4 über einen verjüngten Auslass 5 der Unterdruckkammer 4 verlässt in eine Beruhigungsstrecke 14 hinein und schlussendlich über eine Auslassöffnung 15 für Milchschaum in Richtung Tasse.

In Fig. 1 ist zu erkennen, dass abschnittsweise parallel zu der Milchleitung 7 eine Spülleitung 16 (Spülkanal) verläuft, die ebenfalls starr ausgebildet ist und die fester Bestandteil der Vorrichtung 1 ist. In dem gezeigten Ausführungsbeispiel sind Spülleitung 16 und Milchzuleitung 7 in einem gemeinsamen Kunststoffspritzgussteil ausgebildet, wobei alternativ auch zwei aneinander festgelegte, insbesondere als Kunststoffspritzgussteile ausgebildete Bauteile realisiert werden können.

Die Spülleitung 16 weist ein Einlassende 17 auf, das unmittelbar benachbart zu dem Ende 11 der Milchzuleitung 7 angeordnet ist. An dem Einlassende 17 gegenüberliegenden Ende ist ein Auslassende 18 vorgesehen, welches in dem gezeigten Ausführungsbeispiel wie die Auslassöffnung 15 nach unten weist, wobei später noch zu erläuterndes Spülmedium aus der Spülleitung 18 neben der Auslassöffnung 15, d.h. nicht aus diese hindurch sondern an dieser vorbeiströmen kann.

Um nun die Milchzuleitung 7 reinigen zu können umfasst die Vorrichtung 1 Verbindungsmittel 19, wie diese beispielhaft in Fig. 2 gezeigt sind. Bei den in Fig. 2 gezeigten Verbindungsmitteln 19 handelt es sich um einen abnehmbaren Stopfen, der nur in der gezeigten Verbindungsposition Teil der Vorrichtung 1 und ansonsten ein davon separates (abgelöstes) Teil ist. Alternative Ausführungen werden später beschrieben.

Wesentlich ist, dass mittels der Verbindungsmittel 19 in einer Verbindungsposition eine fluidleitende Verbindung zwischen der Milchzuleitung 7 und der Spülleitung 16 hergestellt wird, in dem gezeigten Ausführungsbeispiel in dem das Ende 11 der Milchzuleitung 7 und das Einlassende 17 der Spülleitung 16 miteinander verbunden werden. Innerhalb der Verbindungsmittel 19 ist ein Verbindungskanal 20 ausgebildet, durch den Spülmedium, vorzugsweise entgegen der in Fig. 1 gezeigten Strömungsrichtung der Milch strömen kann. Das Spülmedium (Dampf und/oder Wasser) verlässt dann in dem gezeigten Ausführungsbeispiel das Auslassende 18 benachbart der Auslassöffnung15 für Milchschaum.

Den Verbindungsmitteln 19 sind Sensormittel 21 zugeordnet, mit denen feststellbar ist, ob sich die Verbindungsmittel 19 in der gezeigten Verbindungsposition befinden, in der die fluidleitende Verbindung zwischen der Milchzuleitung 7 und der Spülleitungl 16 hergestellt ist, oder nicht. Die Sensormittel 21 können hierzu beispielsweise in der Art einer Lichtschranke ausgebildet sein oder in der Art eines Druckschalters. Auch ist es denkbar, dass über die Verbindungsmittel 19 beispielsweise ein elektrischer Stromkreis geöffnet oder geschlossen und dies über die Sensormittel 21 festgestellt wird. Die Sensormittel 21 sind Teil der Vorrichtung 1, wobei sie jedoch dauerhaft an der Kaffeemaschine angeordnet sein können, insbesondere derart, dass die Vorrichtung 1 (auch ohne deren Sensormittel) von der Kaffeemaschine entnehmbar ist. Auch ist es alternativ denkbar, dass die Sensormittel 21 dauerhaft fest mit der Vorrichtung 1 verbunden und gemeinsam mit dieser von der Kaffeemaschine entnehmbar sind. Auch ist es denkbar, dass die Vorrichtung 1 zusammen mit den Sensormitteln 21 dauerhaft fest verbunden ist mit der Kaffeemaschine.

In Fig. 3 ist nun eine alternative Vorrichtung 1 gezeigt, die sich lediglich durch eine alternaive Ausbildung der Verbindungsmittel 19 unterscheidet. Diese sind sowohl in der gezeigten Verbindungsposition als auch in einer hiervon abweichenden Position fest mit der Vorrichtung 1 und/oder der Kaffeemaschine verbunden. Im letztgenannten Fall bleiben diese bevorzugt während der Entnahme oder sonstigen Vorrichtung fest verbunden mit der Kaffeemaschine. In dem gezeigten Ausführungsbeispiel sind die Sensormittel 19 um eine Schwenkachse 22 verschwenkbar, zwischen der gezeigten Verbindungsposition und einer Parkposition, in der die Milchzuleitung 7 mit der Saugleitung 12 verbindbar ist.

Bei dem Ausführungsbeispiel der Vorrichtung 1 gemäß Fig. 4 sind die Verbindungsmittel 19 als einfacher, abnehmbarer Schlauch ausgebildet.

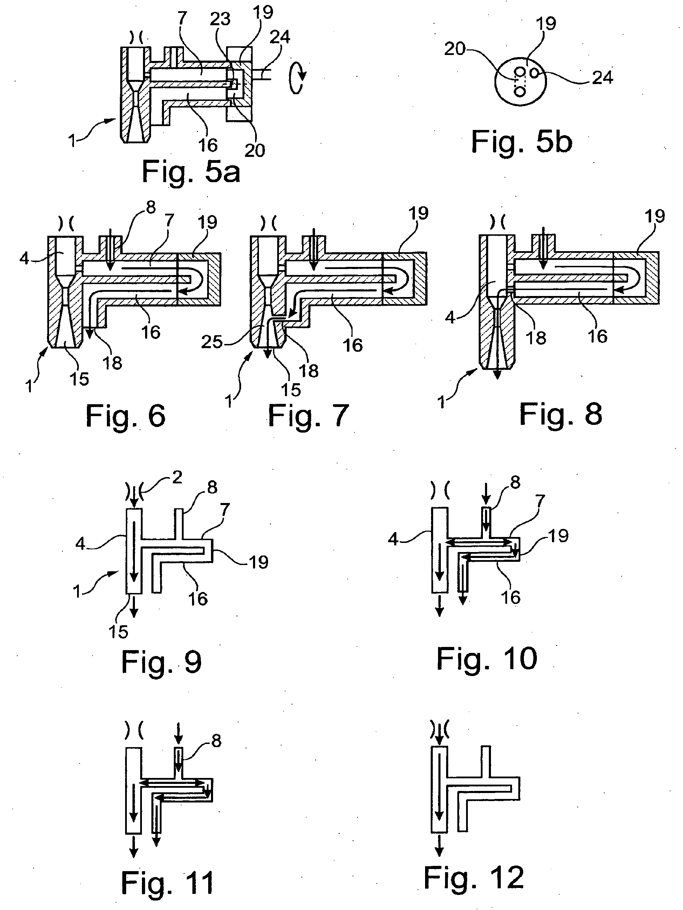

Bei dem Ausführungsbeispiel der Vorrichtung 1 gemäß den Fig. 5a und 5b handelt es sich bei den Verbindungsmitteln 19 um ein Drehteil, welches um eine parallel zu der Milchzuleitung 7 und dem Spülkanal 16 verlaufende Drehachse 23 rotierbar ist, und zwar zwischen der in Fig. 5a gezeigten Verbindungsposition, in der ein Verbindungskanal 20 der Verbindungsmittel 19 die Milchzuleitung und der Spülleitung 16 miteinander verbindet und einer Position, in der ein Milchdurchleitungskanal 24, an den eine Saugleitung anschließt fluidleitend mit der Milchzuleitung 7 verbunden ist. Dem Milchdurchleitungskanal 24 ist bevorzugt auf der von der Milchzuleitung 7 abgewandten Seite ein Stutzen oder eine Andocköffnung für die Saugleitung zugeordnet.

In Fig. 6 ist eine Vorrichtung 1 zur Milchaufschäumung gezeigt, bei welcher durch den Luftkanal 8 hindurch die Milchzuleitung 7 gespült wird. Zusätzlich oder alternativ ist eine Spülung über die Unterdruckkammer 4 möglich. Jedenfalls strömt das Spülmedium entgegen der Strömungsrichtung der Milch hin zu den Verbindungsmitteln 19 und über diese in die Spülleitung 16 in Richtung von dessen Auslassende 18, welches benachbart außerhalb der Auslassöffnung 15 für Milchschaum angeordnet ist.

Das Ausführungsbeispiel gemäß Fig. 1 unterscheidet sich von dem Ausführungsbeispiel gemäß Fig. 6 lediglich dadurch, dass die Auslassöffnung 18 nicht unmittelbar nach außen ausmündet, sondern hier in die Beruhigungsstrecke, bzw. in einen Verbindungskanal 25 stromaufwärts der Auslassöffnung 15 für den Milchschaum.

Das Ausführungsbeispiel gemäß Fig. 8 unterscheidet sich wiederum von dem Ausführungsbeispiel gemäß Fig. 7 lediglich dadurch, dass das Auslassende 18 der Spülleitung 16 unmittelbar in die Unterdruckkammer 4 ausmündet. Dies bedeutet, dass bei den Ausführungsbeispielen gemäß Fig. 7 und 8 das Spülmedium die Auslassöffnung 15 für Milchschaum passieren muss und bei dem Ausführungsbeispiel gemäß Fig. 6 nicht.

In Fig. 9 ist wiederum eine Milchaufschäumvorrichtung 1 mit Milchzuleitung 7, darin einmündender Luftleitung 8 sowie Spülleitung 16 gezeigt, der über Verbindungsmittel 19 mit der Milchzuleitung 7 verbunden ist. Gezeigt ist in Fig. 9, dass, in diesem Fall Wasser durch die Treibdüse 2, die Unterdruckkammer 4 und dann unmittelbar zum Auslass 15 strömt.

In dem Spülmedium gemäß Fig. 10, die über ein entsprechendes Ventil von einer Steuereinheit ansteuerbar ist gelangt Spülmedium, hier Wasser über den Luftkanal 8 in die Milchzuleitung 7 und strömt in dieser in zwei Richtungen, nämlich zum einen unmittelbar in Richtung Unterdruckkammer 4 und zum anderen in Richtung Verbindungsmittel 19 und über diese in der Spülleitung 16.

Bei dem Ausführungsbeispiel gemäß Fig. 11 wird anstelle von Wasser in den Luftkanal 8 heißer Dampf eingeblasen, der sich analog Fig. 10 in zwei Richtungen verteilt.

In Fig. 12 ist ein Reinigungsschritt gezeigt, bei dem heißer Dampf den Weg des Wassers gemäß dem Ausführungsbeispiel der Fig. 9 nimmt.

### Bezugszeichen

- 1: Vorrichtung zur Milchaufschäumung
- 2: Treibdüse
- 3: Wasserdampf
- 4: Unterdruckkammer
- 5: verjüngter Auslass der Unterdruckkammer
- 6: Milch
- 7: Milchzuleitung
- 8: Luftkanal
- 9: Luft
- 10: Drosselende
- 11: Ende der Milchzuleitung
- 12: Saugleitung
- 13: Milchreservoir
- 14: Beruhigungsstrecke
- 15: Auslassöffnung für Milchschaum
- 16: Spülleitung
- 17: Einlassende der Spülleitung
- 18: Auslassende des Spülleitung
- 19: Verbindungsmittel
- 20: Verbindungskanal der Verbindungsmittel
- 21: Sensormittel
- 22: Schwenkachse
- 23: Drehachse
- 24: Milchdurchleitungskanal
- 25: Verbindungskanal stromaufwärts der Auslassöffnung für Milchschaum

## Patentansprüche

1. Vorrichtung (1) zum Erzeugen von Milchschaum, mit einer Düsenanordnung und einer dieser zugeordneten Unterdruckkammer (4), in die durch Dampfbeaufschlagung der Düsenanordnung aus einer Milchzuleitung (7) Milch (6) ansaugbar ist, an die eine Saugleitung (12) zum Herstellen einer fluidleitenden Verbindung zu einem Milchreservoir (13) anschließbar ist, wobei stromabwärts der Unterdruckkammer (4) eine Auslassöffnung (15) für Milchschaum vorgesehen ist, wobei
die Vorrichtung (1) eine Spülleitung (16) umfasst, die mit der Milchzuleitung (7) über in einer Verbindungsposition anordnenbare Verbindungsmittel (19) fluidleitend verbindbar ist,
**dadurch gekennzeichnet,**
**dass** Sensormittel (21) vorgesehen sind, mit denen detektierbar ist, ob sich die Verbindungsmittel (19) in der Verbindungsposition befinden, und dass die Verbindungsmittel (19) in der Verbindungsposition ein als Anschlussende zum Anschließen einer Saugleitung (12) ausgebildetes, von der Unterdruckkammer (4) abgewandtes Ende der Milchzuleitung (7) mit einem benachbart zu dem von der Unterdruckkammer (4) abgewandten Ende der Milchzuleitung (7) angeordneten, als Einlassende (17) ausgebildeten Ende der Spülleitung (16) fluidleitend verbinden.

2. Vorrichtung nach Anspruch 1,
**dadurch gekennzeichnet,**
**dass** die Milchzuleitung (7) bei in der Verbindungsposition angeordneten Verbindungsmitteln (19) fluidleitend mit der Unterdruckkammer (4) verbunden ist, so dass Spülmedium aus der Unterdruckkammer (4) direkt über die Milchzuleitung (7) und die Verbindungsmittel (16) in die Spülleitung (16) und über diese abgeführt werden kann und/oder so dass über eine in die Milchzuleitung (7) mündende Luftleitung zugeführtes Spülmedium aus der Milchzuleitung (7) ohne durch die Spülleitung (16) zu strömen unmittelbar in die Unterdruckkammer (4) und/oder über die Milchzuleitung (7) und die Verbindungsmittel (19) in die Spülleitung (16) strömen und über diese abgeführt werden kann.

3. Vorrichtung nach einem der Ansprüche 1 oder 2,
**dadurch gekennzeichnet,**
**dass** die Spülleitung (16) als starre Leitung ausgebildet ist und/oder dauerhaft fest relativ zu der Milchzuleitung (7) positioniert ist, insbesondere in dem die Spülleitung (16) und die Milchzuleitung (7) in demselben, bevorzugt als Kunststoffspritzgussteil ausgebildeten, Bauteil, vorzugsweise in abschnittsweise Parallelanordnung, angeordnet sind.

4. Vorrichtung nach einer der vorhergehenden Ansprüche,
**dadurch gekennzeichnet,**
**dass** die Verbindungsmittel das von der Unterdruckkammer (4) abgewandte, bevorzugt am Anschlussende für die Saugleitung ausgebildete Ende der Milchzuleitung (7) und das Einlassende (17) der Spülleitung (16) in der Verbindungsposition unmittelbar kontaktieren.

5. Vorrichtung nach einem der vorhergehenden Ansprüche,
**dadurch gekennzeichnet,**
**dass** die Verbindungsmittel (19) abnehmbar angeordnet sind, oder dass die Verbindungsmittel (19) verstellbar, insbesondere verdrehbar und/oder verschiebbar und/oder verschwenkbar, insbesondere an der Vorrichtung (1) und/oder einer Kaffeemaschine gehalten sind.

6. Vorrichtung nach einem der vorhergehenden Ansprüche **dadurch gekennzeichnet,**
**dass** die Verbindungsmittel (19) zusätzlich zu einem Verbindungskanal (20) einen Milchdurchleitungskanal (24) zum Durchleiten von Milch (6) aus einer Saugleitung (12) in die Milchzuleitung (7) aufweisen und dass der Verbindungskanal (20) und der Milchdurchleitungskanal (24) alternativ, insbesondere durch Verdrehen oder Verschwenken der Verbindungsmittel (19), mit der Milchzuleitung (7) fluidleitend verbindbar sind.

7. Vorrichtung nach einem der vorhergehenden Ansprüche,
**dadurch gekennzeichnet,**
**dass** ein Auslassende (18) der Spülleitung (16) benachbart zu der Auslassöffnung (15) für Milchschaum angeordnet ist, so dass Spülmedium neben der Auslassöffnung (15) austreten kann, insbesondere parallel zu einer Milchschaumaustrittsrichtung, oder dass das Auslassende (18) der Spülleitung (16) stromaufwärts der Auslassöffnung (15), insbesondere in einen Verbindungskanal (25) zwischen Unterdruckkammer (4) und Auslassöffnung (15) oder in die Unterdruckkammer (4), ausmündet, so dass Spülmedium durch die Auslassöffnung (15) für Milchschaum austreten kann.

8. Vorrichtung nach einem der vorhergehenden Ansprüche,
**dadurch gekennzeichnet,**
**dass** in die Milchzuleitung (7) eine Luftleitung mündet, durch die bei einem Milchaufschäumprozess Luft (9) der Milch (6) zuführbar ist und /oder durch die der Milchzuleitung (7) bei in der Verbindungsposition angeordneten Verbindungsmitteln (19) Spüllmedium zuführbar ist, welches von der Milchzuleitung (7) unmittelbar in die Unterdruckkammer (4) und/oder über die Milchzuleitung (7) und die Verbindungsmittel (19) in die Spülleitung (16) strömen kann.

9. Kaffeemaschine mit einer Vorrichtung nach einem der vorhergehenden Ansprüche.

10. Kaffeemaschine nach Anspruch 9,
**dadurch gekennzeichnet,**
**dass** die Sensormittel (21) signalleitend mit einer Steuereinheit verbunden sind, die einen Spülvorgang, bei dem, insbesondere erhitztes Wasser, und/oder Wasserdampf durch die Milchzuleitung (7), insbesondere entgegen einer Milchansaugrichtung, förderbar ist unter der Bedingung startet, dass die Sensormittel (21) die Verbindungsmittel (19) in der Verbindungsposition detektieren.

11. Kaffeemaschine nach einem der Ansprüche 9 oder 10,
**dadurch gekennzeichnet,**
**dass** ein Auslassende (18) der Spülleitung (16) derart angeordnet ist, dass das aus dieser ausmündende Spülmedium in dasselbe, insbesondere kaffeemaschineninterne, Auffanggefäß ausmünden kann, wie aus der Milchschaumauslassöffnung der Vorrichtung zum Erzeugen von Milchschaum ausströmender Milchschaum.

12. Kaffeemaschine nach einem der Ansprüche 9 bis 11,
**dadurch gekennzeichnet,**
**dass** die Steuereinheit Spülmediumversorgungsmittel sowie Ventilmittel so ansteuernd ausgebildet ist, dass während des Spülvorgangs Spülmedium in die Unterdruckkammer (4) strömt und aus dieser unmittelbar (entgegen der Milchströmungsrichtung bei der Milchschaumerzeugung) in die Milchzuleitung (7) und über diese in die Spülleitung (16) und/oder so dass während des Spülvorgangs Spülmedium über eine in die Milchzuleitung mündende Luftleitung in die Milchzuleitung (7) und durch diese unmittelbar in die Unterdruckkammer (4) und/oder durch die Milchzuleitung (7) und die Verbindungsmittel (19) in die Spülleitung (16) strömt.

13. System, umfassend eine Kaffeemaschine nach einem der Ansprüche 9 bis 11 sowie ein Milchreservoir (13) und eine Saugleitung (12), mit der das Milchreservoir (13) mit der Milchzuleitung (7) verbindbar und/oder verbunden ist.

14. System nach Anspruch 13,
**dadurch gekennzeichnet,**
**dass** die Milchzuleitung (7) dadurch mit dem Milchreservoir (13) verbindbar ist, dass die Saugleitung (12) unmittelbar an ein Anschlussende der Milchzuleitung (7) oder an die Verbindungsmittel (19) anschließbar oder angeschlossen ist.

15. Verfahren zum Spülen einer Milchzuleitung (7) zu einer Unterdruckkammer (4) in einer Vorrichtung zum Aufschäumen von Milch, insbesondere nach einem der Ansprüche 1 bis 8, mit einem Spülmedium, insbesondere Dampf oder, bevorzugt erhitztes Wasser,
**dadurch gekennzeichnet,**
**dass** vor dem Spülen der Milchzuleitung (7) mit dem Spülmedium, bevorzugt manuell, eine fluidleitende Verbindung zwischen einem von der Unterdruckkammer (4) abgewandten Ende der Milchzuleitung (7), und einer Spülleitung (16) der Vorrichtung (1) hergestellt wird, durch die bevorzugt das Spülmedium nach Passieren der Milchzuleitung (7) abgeführt wird, und dass detektiert wird, ob die fluidleitende Verbindung hergestellt wurde.

16. Verfahren nach Anspruch 15,
**dadurch gekennzeichnet,**
**dass** zum Überführen der Verbindungsmittel in die Verbindungsposition ein Saugschlauch zum Ansaugen von Milch von dem von der Unterdruckkmmer (4) abgewandten Ende der Milchzuleitng (7) entfernt wird und die Verbindungsmittel mit diesem Ende der Milchzuleitung (7) unmittelbar verbunden werden.

## Claims

1. A device (1) for producing milk froth, comprising a nozzle arrangement and a low pressure chamber (4) assigned thereto, into which milk (6) can be drawn from a milk feed line (7) by applying steam to the nozzle arrangement, to which a suction line (12) can be connected for establishing a fluid-guiding connection to a milk reservoir (13), wherein provision is made downstream from the low pressure chamber (4) for an outlet opening (15) for milk froth, wherein the device (1) comprises a flushing pipe (16), which can be connected to the milk feed line (7) in a fluid-guiding manner via connecting means (19), which can be arranged in a connection position,
**characterized in**
**that** the device comprises sensor means (21), by means of which it can be detected, whether the connecting means (19) are located in the connection position and that the connecting means (19) in the connection position connect an end of the milk feed line (7), which is embodied as connection end for connecting a suction line (12) and which faces away from the low pressure chamber (4), to an end of the flushing line (16), which is arranged adjacent to the end of the milk feed line (7), which faces away from the low pressure chamber (4) and which is embodied as inlet end (17), in a fluid-guiding manner.

2. The device according to claim 1,
**characterized in**
**that**, when connecting means (19) are arranged in the connection position, the milk feed line (7) is connected to the low pressure chamber (4) in a fluid-guiding manner, so that flushing medium can be discharged from the low pressure chamber (4) directly via the milk feed line (7) and the connecting means (16) into the flushing line (16) and can be discharged via the latter and/or so that flushing medium, which is supplied via an air pipe, which ends in the milk feed line (7), can flow directly into the low pressure chamber (4) without flowing through the flushing line (16) and/or can flow into the flushing line (16) and can be discharged via the latter via the milk feed line (7) and the connecting means (19).

3. The device according to one of claims 1 or 2,
**characterized in**
**that** the flushing line (16) is embodied as rigid line and/or is positioned tightly in a permanent manner relative to the milk feed line (7), in particular in that the flushing line (16) and the milk feed line (7) are arranged in the same component, which is preferably made of injection molded plastic part, preferably in parallel arrangement in sections.

4. The device according to one of the preceding claims,
**characterized in**
**that**, in the connection position, the connecting means directly contact the end of the milk feed line (7), which faces away from the low pressure chamber (4) and which is preferably embodied at the connection end for the suction line, and the inlet end (17) of the flushing line (16).

5. The device according to one of the preceding claims,
**characterized in**
**that** the connecting means (19) are arranged so as to be capable of being removed, or that the connecting means (19) are held so as to be capable of being adjusted, in particular twisted and/or displaced and/or pivoted, in particular at the device (1) and/or a coffee machine.

6. The device according to one of the preceding claims,
**characterized in**
**that**, in addition to a connection channel (20), the connecting means (19) encompass a milk conveying channel (24) for conveying milk (6) from a suction line (12) into the milk feed line (7) and that, as an alternative, the connection channel (20) and the milk conveying channel (24) can be connected to the milk feed line (7) in a fluid-guiding manner, in particular by twisting or pivoting the connecting means (19).

7. The device according to one of the preceding claims,
**characterized in**
**that** an outlet end (18) of the flushing line (16) is arranged adjacent to the outlet opening (15) for milk froth, so that flushing medium can escape next to the outlet opening (15), in particular parallel to a milk froth outlet opening, or that, upstream of the outlet opening (15), the outlet end (18) of the flushing line (16) leads in particular into a connection channel (25) between low pressure chamber (4) and outlet opening (15) or into the low pressure chamber (4), so that flushing medium can escape through the outlet opening (15) for milk froth.

8. The device according to one of the preceding claims,
**characterized in**
**that** an air pipe, through which air (9) can be supplied to the milk (6) in response to a milk frothing process and/or through which flushing medium can be supplied to the milk feed line (7) when connecting means (19) are arranged in the connection position, ends in the milk feed line (7), with said flushing medium being able to flow from the milk feed line (7) directly into the low pressure chamber (4) and/or can flow into the flushing line (16) via the milk feed line (7) and the connecting means (19).

9. A coffee machine comprising a device according to one of the preceding claims.

10. The coffee machine according to claim 9,
**characterized in**
**that** the sensor means (21) are connected in a signalguiding manner to a control unit, which starts a flushing process, in response to which in particular heated water and/or water vapor can be conveyed through the milk feed line (7), in particular opposite to a milk draw-in direction, under the condition that the sensor means (21) detect the connecting means (19) in the connection position.

11. The coffee machine according to one of claims 9 or 10,
**characterized in**
**that** an outlet end (18) of the flushing line (16) is arranged such that flushing medium, which leads out of said flushing line can lead into the same collecting vessel, in particular in the interior of the coffee machine, in the same manner as milk froth, which flows out of the milk outlet opening of the device, for producing milk froth.

12. The coffee machine according to one of claims 9 to 11,
**characterized in**
**that** the control unit is embodied so as to control flushing medium supply means as well as valve means in such a manner that, during the flushing process, flushing medium flows into the low pressure chamber (4) and out of the latter (opposite to the milk flow direction in response to the milk froth production) directly into the milk feed line (7) and via the latter into the flushing line (16) and/or so that flushing medium flows via an air pipe, which ends in the milk feed line, into the milk feed line (7) and through the latter directly into the low pressure chamber (4) and/or into the flushing line (16) through the milk feed line (7) and the connecting means (19) during the flushing process.

13. A system comprising a coffee machine according to one of claims 9 to 11 as well as a milk reservoir (13) and a suction line (12), by means of which the milk reservoir (13) can be connected and/or is connected to the milk feed line (7).

14. The system according to claim 13,
**characterized in**
**that** the milk feed line (7) can be connected to the milk reservoir (3) in that the suction line (12) can be connected or is connected directly to a connection end of the milk feed line (7) or to the connecting means (19).

15. A method for flushing a milk feed line (7) to a low pressure chamber (4) in a device for frothing milk, in particular according to one of claims 1 to 8, comprising a flushing medium, in particular steam, or preferably heated water,
**characterized in**
**that**, prior to flushing the milk feed line (7) with the flushing medium, a fluid-guiding connection is established, preferably manually, between an end of the milk feed line (7), which faces away from the low pressure chamber (4), and a flushing line (15) of the device (1), through which preferably the flushing medium is discharged after passing through the milk feed line (7), and that it is detected, whether the fluid-guiding connection was established.

16. The method according to claim 15,
**characterized in**
**that**, for transferring the connecting means into the connection position, a suction hose for drawing in milk is removed from the end of the milk feed line (7), which faces away from the low pressure chamber (4) and the connecting means are connected directly to this end of the milk feed line (7).

## Revendications

1. Dispositif (1) de production de mousse de lait, comportant un système de buses et une chambre de dépression (4) associée à celui-ci et dans laquelle du lait (6) peut être aspiré depuis une conduite d'alimentation en lait (7) par sollicitation à la vapeur du système de buses, conduite à laquelle une conduite d'aspiration (12) peut être raccordée pour établir une liaison de conduction de fluide avec un réservoir de lait (13), un orifice de sortie (15) pour la mousse de lait étant prévu en aval de la chambre de dépression (4),
le dispositif (1) comprenant une conduite de lavage (16) qui peut être reliée en conduction de fluide à la conduite d'alimentation en lait (7) par des moyens de liaison (19) pouvant être disposés dans une position de liaison,
**caractérisé en ce que**
sont prévus des moyens de détection (21) qui permettent de détecter si les moyens de liaison (19) se trouvent dans la position de liaison et **en ce que** les moyens de liaison (19), en position de liaison, relient en conduction de fluide une extrémité se présentant sous forme d'une extrémité de liaison servant à la liaison d'une conduite d'aspiration (12) et détournée de la chambre de dépression (4) de la conduite d'alimentation en lait (7) à une extrémité disposée à proximité de l'extrémité détournée de la chambre de dépression (4) de la conduite d'alimentation en lait (7) et se présentant sous forme d'extrémité d'admission (17) de la conduite de lavage (16).

2. Dispositif selon la revendication 1,
**caractérisé en ce que**
la conduite d'alimentation en lait (7), lorsque les moyens de liaison (19) sont disposés en position de liaison, est reliée en conduction de fluide à la chambre de dépression (4), de telle sorte que du fluide de lavage peut être évacué directement depuis la chambre de dépression (4) via la conduite d'alimentation en lait (7) et les moyens de liaison (16) dans la conduite de lavage (16) et par le biais de celle-ci et/ou que du fluide de lavage acheminé par une conduite d'air débouchant dans la conduite d'alimentation en lait (7) peut affluer directement depuis la conduite d'alimentation en lait (7) sans passer par la conduite de lavage (16) dans la chambre de dépression (4) et/ou via la conduite d'alimentation en lait (7) et les moyens de liaison (19) dans la conduite de lavage (16) et peut être évacué par le biais de celle-ci.

3. Dispositif selon une des revendications 1 ou 2,
**caractérisé en ce que**
la conduite de lavage (16) se présente sous forme d'une conduite rigide et/ou est positionnée en permanence fixement par rapport à la conduite d'alimentation en lait (7), en particulier par le fait que la conduite de lavage (16) et la conduite d'alimentation en lait (7) sont disposées, de préférence en agencement parallèle par sections, dans la même pièce fabriquée de préférence à partir d'une pièce injectée en plastique.

4. Dispositif selon une des revendications précédentes,
**caractérisé en ce que**
les moyens de liaison sont en contact direct avec l'extrémité détournée de la chambre de dépression (4) et réalisée de préférence à l'extrémité de liaison pour la conduite d'aspiration de la conduite d'alimentation en lait (7) et l'extrémité d'admission (17) de la conduite de lavage (16) en position de liaison.

5. Dispositif selon une des revendications précédentes,
**caractérisé en ce que**
les moyens de liaison (19) sont disposés de manière à être amovibles ou **en ce que** les moyens de liaison (19) sont maintenus de manière à être réglables, en particulier de manière à pouvoir tourner et/ou être déplacés et/ou être pivotés, en particulier au niveau du dispositif (1) et/ou d'une machine à café.

6. Dispositif selon une des revendications précédentes,
**caractérisé en ce que**
les moyens de liaison (19) présentent, en plus d'un canal de liaison (20), un canal de passage de lait (24) pour le passage de lait (6) venant d'une conduite d'aspiration (12) dans la conduite d'alimentation en lait (7) et **en ce que** le canal de liaison (20) et le canal de passage de lait (24) peuvent en alternative être reliés en conduction de fluide à la conduite d'alimentation en lait (7), en particulier par rotation ou pivotement des moyens de liaison (19).

7. Dispositif selon une des revendications précédentes,
**caractérisé en ce**
**qu'**une extrémité de sortie (18) de la conduite de lavage (16) est disposée à proximité de l'orifice de sortie (15) pour la mousse de lait, de sorte que du fluide de lavage peut sortir près de l'orifice de sortie (15), en particulier parallèlement à un sens de sortie de mousse de lait, ou en ce que l'extrémité de sortie (18) de la conduite de lavage (16) débouche en amont de l'orifice de sortie (15), en particulier dans un canal de liaison (25) situé entre la chambre de dépression (4) et l'orifice de sortie (15) ou dans la chambre de dépression (4), de sorte que du fluide de lavage peut sortir par l'orifice de sortie (15) pour la mousse de lait.

8. Dispositif selon une des revendications précédentes,
**caractérisé en ce que**
dans la conduite d'alimentation en lait (7) débouche une conduite d'air par laquelle, lors d'un processus de moussage de lait, de l'air (9) peut être acheminé dans le lait (6) et/ou par laquelle du fluide de lavage peut être acheminé vers la conduite d'alimentation en lait (7) lorsque les moyens de liaison (19) sont disposés en position de liaison, lequel fluide de lavage peut affluer directement depuis la conduite d'alimentation en lait (7) dans la chambre de dépression (4) et/ou via la conduite d'alimentation en lait (7) et les moyens de liaison (19) dans la conduite de lavage (16).

9. Machine à café comportant un dispositif selon une des revendications précédentes.

10. Machine à café selon la revendication 9,
**caractérisée en ce que**
les moyens de détection (21) sont reliés en conduction de signaux à une unité de commande qui démarre un processus de lavage lors duquel de l'eau, en particulier chauffée, et/ou de la vapeur d'eau peut être transportée par la conduite d'alimentation en lait (7), en particulier dans le sens inverse à un sens d'aspiration du lait, à condition que les moyens de détection (21) détectent les moyens de liaison (19) en position de liaison.

11. Machine à café selon une des revendications 9 ou 10,
**caractérisée en ce**
**qu'**une extrémité de sortie (18) de la conduite de lavage (16) est disposée de manière à ce que du fluide de lavage débouchant de celle-ci puisse déboucher dans le même récipient collecteur, en particulier interne à la machine à café, que la mousse de lait s'écoulant hors de l'orifice de sortie de mousse de lait du dispositif de production de mousse de lait.

12. Machine à café selon une des revendications 9 à 11,
**caractérisée en ce que**
l'unité de commande, des moyens d'alimentation en fluide de lavage et des moyens de soupape sont réalisés de manière à assurer la commande de telle sorte que, pendant le processus de lavage, du fluide de lavage afflue dans la chambre de dépression (4) et depuis celle-ci directement (dans le sens inverse au sens d'écoulement du lait lors de la production de mousse de lait) dans la conduite d'alimentation en lait (7) et via celle-ci dans la conduite de lavage (16) et/ou de telle sorte que, pendant le processus de lavage, du fluide de lavage afflue par une conduite d'air débouchant dans la conduite d'alimentation en lait dans la conduite d'alimentation en lait (7) et par celle-ci directement dans la chambre de dépression (4) et/ou via la conduite d'alimentation en lait (7) et les moyens de liaison (19) dans la conduite de lavage (16).

13. Système comprenant une machine à café selon une des revendications 9 à 11 et un réservoir de lait (13) et une conduite d'aspiration (12) par lequel le réservoir de lait (13) peut être et/ou est relié à la conduite d'alimentation en lait (7).

14. Système selon la revendication 13,
**caractérisé en ce que**
la conduite d'alimentation en lait (7) peut être reliée au réservoir de lait (13) par le fait que
la conduite d'aspiration (12) peut être ou est reliée directement à une extrémité de liaison de la conduite d'alimentation en lait (7) ou aux moyens de liaison (19).

15. Procédé de lavage d'une conduite d'alimentation en lait (7) vers une chambre de dépression (4) dans un dispositif de moussage de lait, en particulier selon une des revendications 1 à 8, à l'aide d'un fluide de lavage, en particulier de la vapeur ou de l'eau, de préférence chauffée,
**caractérisé en ce que**,
avant le lavage de la conduite d'alimentation en lait (7) avec le fluide de lavage, une liaison de conduction de fluide est établie de préférence manuellement entre une extrémité détournée de la chambre de dépression (4) de la conduite d'alimentation en lait (7) et une conduite de lavage (16) du dispositif (1), conduite de lavage par laquelle le fluide de lavage, après être passé dans la conduite d'alimentation en lait (7), est de préférence évacué, et **en ce qu'**il est détecté si la liaison de conduction de fluide a été établie.

16. Procédé selon la revendication 15,
**caractérisé en ce que**,
pour mettre les moyens de liaison en position de liaison, un tuyau d'aspiration permettant d'aspirer du lait est éloigné de l'extrémité détournée de la chambre de dépression (4) de la conduite d'alimentation en lait (7) et les moyens de liaison sont reliés directement à cette extrémité de la conduite d'alimentation en lait (7).
